# EUROPEAN PATENT APPLICATION

(11) **EP 4 694 280 A1**
(43) Date of publication of application: **11.02.2026**
(21) Application number: 23931289.5
(22) Date of filing: 04.04.2023
(51) Int. Cl.: H04W 24/02

(54) **TRANSMISSION CONTROL METHOD AND APPARATUS, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Taor, Simon Edward William
(86) International application number: PCT/CN2023/086268
(87) International publication number: WO 2024/207216

(57) **Abstract**

Embodiments of the present application provide a transmission control method and apparatus, a communication device, and a storage medium. The method comprises: a terminal device receives first configuration information, the first configuration information being used for indicating whether data of a first service or a first radio bearer (RB) is allowed to be transmitted using the store-and-forward mode of a satellite.

## Description

### TECHNICAL FIELD

Embodiments of the disclosure relate to the field of mobile communication technologies, and particularly to a method and an apparatus for transmission control, a communication device, and a storage medium.

### BACKGROUND

A Non Terrestrial Network (NTN) provides communication services to terrestrial users through a satellite communication. In comparison with the terrestrial cellular network communication, the satellite communication has multiple unique advantages, such as: unrestricted by user geographical areas, long communication distance, and high stability.

The links in the NTN include a feeder link and a service link, where the feeder link is a link for communication between a gateway and a satellite, and the service link is a link for communication between a terminal and a satellite. A working mode of the communication satellite includes a store and forward mode. In the store and forward mode, the feeder link and the service link cannot be available at the same time, and thus how to control the data transmission in the store and forward mode is an urgent problem to be solved.

### SUMMARY

Embodiments of the disclosure provide a method and an apparatus for transmission control, a communication device, and a storage medium.

The method for transmission control provided in an embodiment of the disclosure includes a following operation.

A terminal device receives first configuration information. The first configuration information is used for indicating whether data of a first service or a first Radio Bearer (RB) is allowed to be transmitted using a store and forward mode of a satellite.

The method for transmission control provided in an embodiment of the disclosure includes a following operation.

A network device transmits first configuration information. The first configuration information is used for indicating whether data of a first service or a first RB is allowed to be transmitted using a store and forward mode of a satellite.

An apparatus for transmission control provided in an embodiment of the disclosure, which is applied to a terminal device, includes a receiving unit.

The receiving unit is configured to receive first configuration information. The first configuration information is used for indicating whether data of a first service or a first RB is allowed to be transmitted using a store and forward mode of a satellite.

An apparatus for transmission control provided in an embodiment of the disclosure, which is applied to a network device, includes a transmitting unit.

The transmitting unit is configured to transmit first configuration information. The first configuration information is used for indicating whether data of a first service or a first RB is allowed to be transmitted using a store and forward mode of a satellite.

A communication device provided in an embodiment of the disclosure may be the terminal device in the above method or the network device in the above method, and the communication device includes a processor and a memory. The memory is configured to store a computer program. The processor is configured to call and execute the computer program stored in the memory to perform the foregoing method for transmission control.

A chip provided in an embodiment of the disclosure is used for implementing the above method for transmission control.

Specifically, the chip includes a processor configured to call and execute a computer program from a memory, to cause a device on which the chip is installed to perform the above method for transmission control.

A computer readable storage medium provided in an embodiment of the disclosure is used for storing a computer program that causes a computer to perform the above method for transmission control.

A computer program product provided in an embodiment of the disclosure includes computer program instructions that cause a computer to perform the above method for transmission control.

A computer program provided in an embodiment of the disclosure causes a computer to perform the above method for transmission control when running on the computer.

According to the above technical solution, a network device transmits first configuration information to a terminal device, and the terminal device receives the first configuration information, where the first configuration information is used for indicating whether data of a first service or a first RB is allowed to be transmitted using a store and forward mode of a satellite, so that the terminal device, in the NTN network, can control whether data can be transmitted to the satellite operated in the store and forward mode based on the first configuration information, thereby realizing the control of the data transmission in the store and forward mode.

### BRIEF DESCRIPTION OF THE DRAWINGS

The accompanying drawings, which are illustrated herein, provide a further understanding of the disclosure and constitute a part of this disclosure. The exemplary embodiments of the disclosure and their description are used to explain the disclosure and not to unduly limit the disclosure. In the drawings:
FIG. 1 is a diagram of an application scenario according to an embodiment of the disclosure.
FIG. 2 is an architecture diagram of a communication system provided in an embodiment of the disclosure.
FIG. 3 is an architecture diagram of another communication system provided in an embodiment of the disclosure.
FIG. 4 is a diagram of an NTN scenario based on a transparent payload satellite provided in an embodiment of the disclosure.
FIG. 5 is a diagram of an NTN scenario based on a regenerative payload satellite provided in an embodiment of the disclosure.
FIG. 6 is an optional structural diagram of an NTN system provided in an embodiment of the disclosure.
FIG. 7 is an optional structural diagram of an NTN system provided in an embodiment of the disclosure.
FIG. 8 is an optional flowchart of a method for transmission control provided in an embodiment of the disclosure.
FIG. 9 is an optional flowchart of a method for transmission control provided in an embodiment of the disclosure.
FIG. 10 is an optional flowchart of a method for transmission control provided in an embodiment of the disclosure.
FIG. 11 is an optional structural diagram of a transmission control apparatus provided in an embodiment of the disclosure.
FIG. 12 is an optional structural diagram of a transmission control apparatus provided in an embodiment of the disclosure.
FIG. 13 is a structural diagram of a communication device provided in an embodiment of the disclosure.
FIG. 14 is a structural diagram of a chip provided in an embodiment of the disclosure.
FIG. 15 is a block diagram of a communication system provided in an embodiment of the disclosure.

### DETAILED DESCRIPTION

The technical solutions in the embodiments of the disclosure would be described below in conjunction with the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

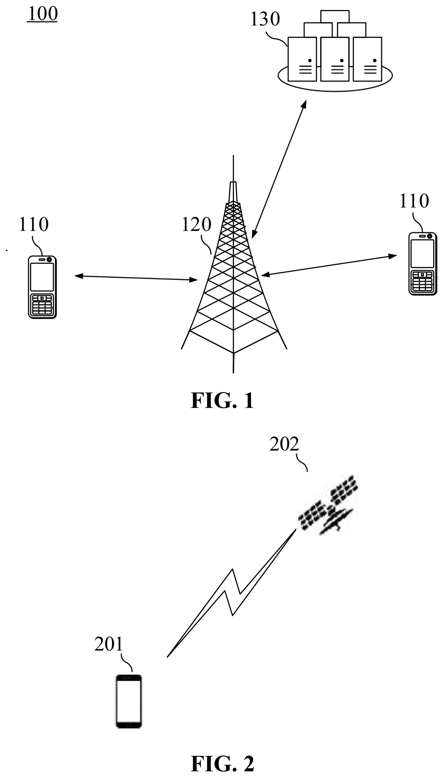

FIG. 1 is a diagram of an application scenario according to an embodiment of the disclosure.

As illustrated in FIG. 1, a communication system 100 may include terminal devices 110 and a network device 120. The network device 120 may communicate with the terminal devices 110 through an air interface. Multi-service transmissions are supported between the terminal devices 110 and the network device 120.

It should be understood that the embodiments of the present disclosure are described only using the communication system 100 as an example, and the embodiments of the present disclosure are not limited thereto. That is, the technical solutions in the embodiments of the present disclosure can be applied to various communication systems, such as a Long Term Evolution (LTE) system, an LTE Time Division Duplex (TDD) system, a Universal Mobile Telecommunications System (UMTS) , an Internet of Things (IoT) system, a Narrow Band Internet of Things (NB-IoT) system, an enhanced Machine-Type Communications (eMTC) system, a fifth generation (5G) communication system (also referred to as New Radio (NR) communication system) or a future communication system, or the like.

In the communication system 100 illustrated in FIG. 1, the network device 120 may be an access network device that communicates with the terminal devices 110. The access network device may provide communication coverage for a particular geographic area and may communicate with the terminal devices 110 (e.g., UE) located within the coverage area.

The network device 120 may be an Evolutional Node B (eNB or eNodeB) in the LTE system, a Next Generation Radio Access Network (NG RAN) device, a base station (gNB) in the NR system, a radio controller in a Cloud Radio Access Network (CRAN), or a relay station, an access point, an on-board device, a wearable device, a hub, a switch, a bridge, a router, or a network device in a future evolved Public Land Mobile Network (PLMN), or the like.

Optionally, the terminal device 110 may be any terminal device, which includes but is not limited to a terminal device in wired or wireless connection with the network device 120 or other terminal devices.

For example, the terminal device 110 may refer to an access terminal, User Equipment (UE), a user unit, a user station, a mobile station, a remote station, a remote terminal, a mobile device, a user terminal, a terminal, a wireless communication device, a user agent, or a user apparatus. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with a wireless communication function, a computing device or other processing devices connected to a wireless modem, an on-board device, a wearable device, a terminal device in a 5G network or a terminal device in a future evolved network, or the like.

The terminal device 110 may be used for a device-to-device (D2D) communication.

The wireless communication system 100 may further include a core network device 130 that communicates with the base station, and the core network device 130 may be a 5G Core (5GC) device, for example, an Access and Mobility Management Function (AMF), for another example, an Authentication Server Function (AUSF), for another example, a User Plane Function (UPF), for another example, a Session Management Function (SMF). Alternatively, the core network device 130 may also be an Evolved Packet Core (EPC) device of the LTE network, for example, a Session Management Function + Core Packet Gateway (SMF+PGW-C) device of the core network. It should be understood that the SMF+PGW-C may simultaneously implement functions capable of the SMF and the PGW-C. In the process of the network evolution, the core network device may also be referred to as other names, or may be a new network entity formed by dividing the functions of the core network, which would not be limited in the embodiments of the present disclosure.

Connections can be established between various functional units in the communication system 100 through Next Generation (NG) interfaces for achieving communication.

For example, the terminal device establishes an air interface connection with the access network device through an NR interface for transmission of user plane data and control plane signaling. The terminal device may establish a control plane signaling connection with the AMF through an NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through an NG interface 6 (N6 for short). The AMF may establish a control plane signaling connection with the SMF through an NG interface 11 (N11 for short). The SMF may establish a control plane signaling connection with the PCF through an NG interface 7 (N7 for short).

FIG. 1 exemplarily illustrates one base station, one core network device and two terminal devices. Optionally, the wireless communication system 100 may include multiple base stations, and the respective number of terminal devices may be included within the coverage area of each of the base stations, which would not be limited in embodiments of the present disclosure.

At present, the Third Generation Partnership Project (3GPP) is studying a NTN technology, and the NTN technology generally provides communication services to terrestrial users through a satellite communication. Compared with terrestrial cellular network communication, the satellite communication has many advantages. First of all, the satellite communication is unrestricted by geographical areas. For example, general land communications cannot cover areas such as oceans, high mountains, deserts, etc., at which communication devices cannot be set up or communication coverage cannot be done due to sparse population. For the satellite communication, because a satellite can cover vast areas and the satellite can orbit around the earth, theoretically the satellite can provide coverage to every corner of the earth. Secondly, the satellite communication delivers great social value. The Satellite communication enables low-cost coverage in remote mountainous areas and poor and backward countries or regions, so that people in these regions can enjoy advanced voice communication and mobile Internet technologies, which can narrow the digital divide with developed regions and prompts the local development. Thirdly, the satellite communication provides long-distance communication without significantly increasing the communication cost. Finally, the satellite communication offers high stability, which is unaffected by natural disasters.

The NTN technologies can be combined with various communication systems. For example, the NTN technologies may be combined with the NR system as an NR-NTN system. For another example, the NTN technologies may be combined with the IoT system as an IoT-NTN system. As an example, the IoT-NTN system may include an NB-IoT-NTN system and an eMTC-NTN system.

FIG. 2 is an architecture diagram of a communication system provided in an embodiment of the disclosure.

As illustrated in FIG. 2, the communication system includes a terminal device 201 and a satellite 202, and wireless communication can be performed between the terminal device 201 and the satellite 202. The network formed between the terminal device 201 and the satellite 202 may also be referred to as the NTN. In the architecture of the communication system illustrated in FIG. 2, the satellite 202 may have the functions of the base station, and a direct communication can be performed between the terminal device 201 and the satellite 202. In the system architecture, the satellite 202 may be referred to as a network device. In some embodiments of the disclosure, the communication system may include multiple network devices 1102, and another number of terminal devices may be included in the coverage of each network device 1102, which is not limited in embodiments of the present disclosure.

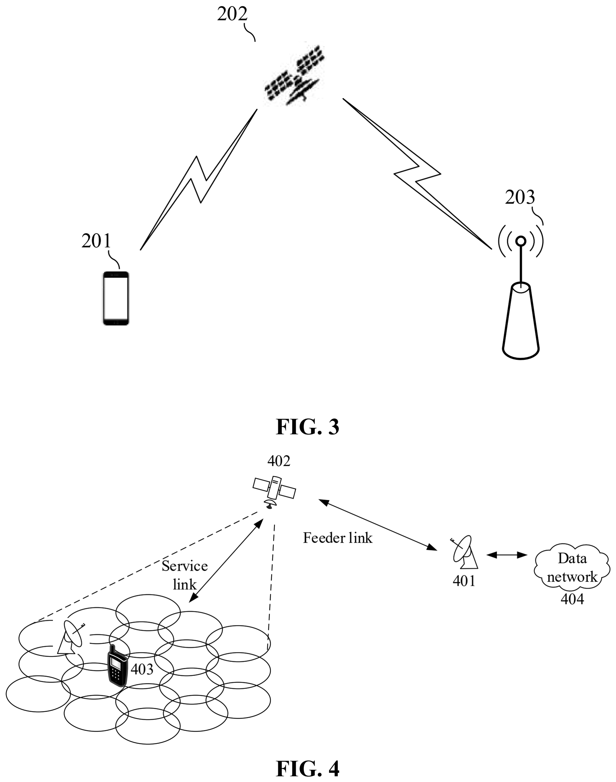

FIG. 3 is an architecture diagram of another communication system provided in an embodiment of the disclosure.

As illustrated in FIG. 3, the communication system includes a terminal device 201, a satellite 202, and a base station 203, wireless communication can be performed between the terminal device 201 and the satellite 202, and communication can be performed between the satellite 202 and the base station 203. The network formed among the terminal device 201, the satellite 202, and the base station 203 may also be referred to as the NTN. In the architecture of the communication system illustrated in FIG. 3, the satellite 202 may not have the functions of the base station, and communication between the terminal device 201 and the base station 203 needs to be relayed by the satellite 202. Under the system architecture, the base station 203 may be referred to as a network device. In some embodiments of the disclosure, the communication system may include multiple base stations 203, and another number of terminal devices may be included in the coverage of each base station, which is not limited in embodiments of the present disclosure. The base station 203 may be the network device 120 in FIG. 1.

It should be understood that the satellite 202 described above includes, but is not limited to:

Low-Earth Orbit (LEO) satellite, Medium-Earth Orbit (MEO) satellite, Geostationary Earth Orbit (GEO) satellite, High Elliptical Orbit (HEO) satellite and so on. The satellite may use multiple beams to cover terrestrial areas, for example, one satellite may form dozens or even hundreds of beams to cover the terrestrial areas. In other words, one satellite beam can cover a terrestrial area with a diameter of tens to hundreds of kilometers, to ensure the coverage of the satellite and increase the system capacity of the entire satellite communication system.

As an example, the altitude range of the LEO satellites is 500 kilometers (km) to 1500 km, and the orbital period is about 1.5 hours to 2 hours. The signal propagation delay of a single-hop communication between users is generally less than 20 milliseconds (ms). The maximum satellite visible time is 20 minutes. The LEO satellite has short signal propagation distance, and less link loss, and it has lower requirement for the transmission power of the user terminals. The orbital altitude of the GEO satellites is 35786 km, and the rotation period of the GEO around the Earth is 24 hours. The signal propagation delay of a single-hop communication between users is generally 250 ms.

In order to ensure the coverage of the satellites and improve the system capacity of the entire satellite communication system, the satellites cover terrestrial areas with multiple beams, and one satellite may form dozens or even hundreds of beams to cover the terrestrial areas. One satellite beam may cover a terrestrial region having a diameter of tens to hundreds of kilometers.

It should be noted that FIGS. 1 to 3 only illustrates, by way of examples, the systems to which the present disclosure are applied. Of course, the methods illustrated in the embodiments of the present disclosure may also be applied to other systems. In addition, the terms "system" and "network" in the present disclosure may usually be used interchangeably. In the disclosure, the term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship. It should also be understood that the term "indication/indicate/indicating" mentioned in the embodiments of the disclosure may be a direct indication, or may be an indirect indication, or may represent existence of an association relationship. For example, A indicates B, which may represent that A directly indicates B, for example, B may be obtained by A; or may represent that A indirectly indicates B, for example, A indicates C, and B may be obtained by C; or may represent that an association relationship exists between A and B. It should also be understood that the term "corresponding/correspondence/correspond" mentioned in the embodiments of the present disclosure may indicate that there are direct or indirect correspondences between two objects, or may indicate that there is an association relationship between the two objects, or may have an indicating and being indicated relationship, a configuring and being configured relationship, or the like. It should also be understood that the terms "predefined/predefinition" or "predefined rules" mentioned in the embodiments of the present disclosure may be implemented by pre-storing corresponding codes or tables or by other means that may be used to indicate relevant information in devices (e.g., including terminal devices and network devices), specific implementations of which are not limited herein. For example, the "predefined" may refer to what is defined in protocol. It should also be understood that, in the embodiments of the present disclosure, the "protocol" may refer to standard protocols in the communication field, and may include, for example, an LTE protocol, an NR protocol and related protocols applied in future communication systems, which are not limited in the present disclosure.

Satellites can be divided into two types from the functions they provide: the transparent payload satellite and regenerative payload satellite. For the transparent payload satellite, it only provides functions of radio frequency filtering, frequency conversion and amplification, and provides transparent forwarding of signals, and thus the forwarded waveform signal is unchanged. For the regenerative payload satellite, it provides, in addition to functions of radio frequency filtering, frequency conversion and amplification, functions of demodulation/decoding, switch/routing, coding/modulation, the regenerative payload satellite has all of part of functions of a base station.

In the NTN, the following network elements may be included: one or more gateways, feeder links, service links, satellites, inter-satellite links. The gateway is used for communication between the satellite and the terrestrial public network, or between the gNB on the satellite and the core network, or between the gNB distribution unit (DU) on the satellite and the gNB base station center unit (CU) on the ground. The feeder link is a link for communication between the gateway and the satellite. The service link is a link for communication between the terminal device and the satellite. Satellites can be divided into two types from the functions they provide: the transparent payload satellite and regenerative payload satellite. For the transparent payload satellite, it only provides functions of radio frequency filtering, frequency conversion and implication, and provides transparent transmission forwarding of signals, and thus the forwarded waveform signal is unchanged. For the regenerative payload satellite, it provides, in addition to functions of radio frequency filtering, frequency conversion and implication, functions of demodulation/decoding, switch/routing, coding/modulation. The regenerative payload satellite has all or part of functions of a base station. Herein, the inter-satellite link exists as a link for communication between satellites in the regenerative payload network architecture.

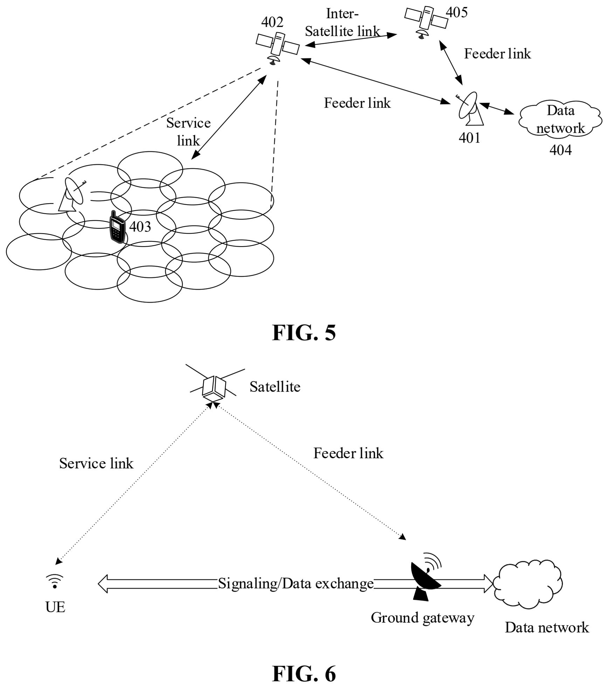

FIGS. 4 and 5 illustrate diagrams of NTN scenarios based on the transparent payload satellite and the regenerative payload satellite, respectively.

As illustrated in FIG. 4, for the NTN scenario based on the transparent payload satellite, a communication between the gateway 401 and the satellite 402 is performed via the feeder link, and a communication between the satellite 402 and the terminal 403 may be performed via a service link, where the gateway 401 is connected to the data network 404. As illustrated in FIG. 5, for the NTN scenario based on the regenerative payload satellite, a communication between the satellite 402 and the satellite 405 is performed via the inter-satellite link, a communication between the gateway 401 and the satellite 402 or the satellite 405 is performed via the feeder link, and a communication between the satellite 402 and the terminal 403 may be performed via the service link.

For convenience of understanding the technical solutions of the embodiments of the disclosure, related technologies in the embodiments of the disclosure are described as follows. The following related technologies may be used as alternative solutions and may be combined with the technical solutions of the embodiments of the disclosure in various ways, all of which belong to the scope of protection of the embodiments of the disclosure.

A store and forward mode of a satellite means that the service link between the satellite and users served by the satellite and the feeder link between the satellite and the ground gateway in the NTN network are not available at the same time. Therefore, the satellite needs to store the transmitted data correspondingly when one link is connected and forward it when another link is connected. In this way, the deployment cost of the ground gateway can be reduced and the flexibility of the deployment is improved, that is, there is no need to deploy the ground gateway in an area adjacent to users. This mode is suitable for services that are less sensitive or strict to latency requirements.

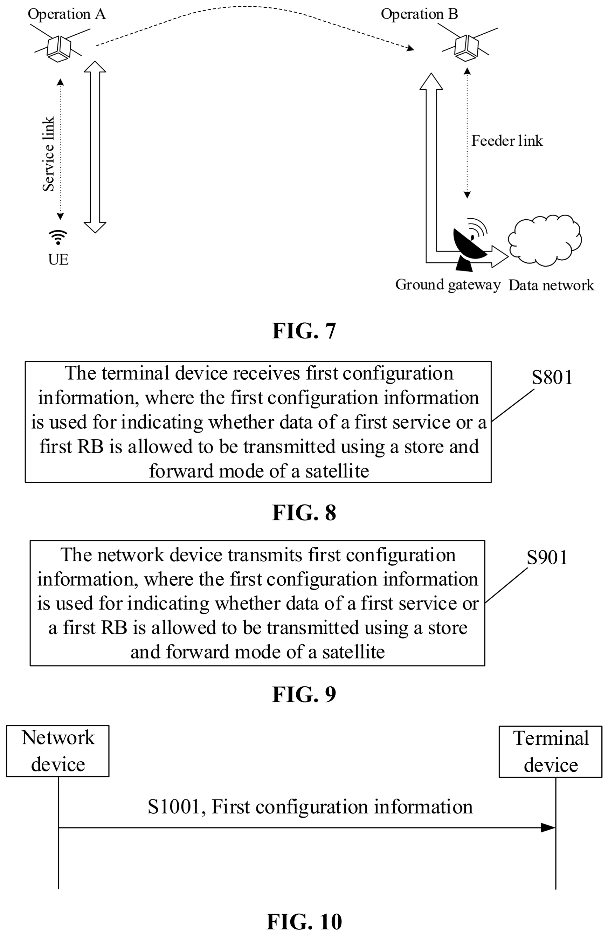

FIGS. 6 and 7 are diagrams of an ordinary satellite operation mode and a store and forward satellite operation mode, respectively.

In the ordinary satellite operation mode illustrated in FIG. 6, signaling/data exchanges between the UE and the ground network via the satellite requires that both the service link and the feeder link are available simultaneously, and thus the peer-to-peer connection between the UE and the ground network via the satellite is continuous.

In the store and forward operation mode illustrated in FIG. 7, the service link and the feeder link cannot be available simultaneously, and the signaling/data exchanges between the UE and the ground network via the satellite are divided into the following two operations A and B.

At operation A, the signaling/data exchanges between the UE and the satellite are performed through the service link. At this time, no feeder link connection is established between the satellite and the ground network. As the satellite gradually moves away from the UE, the service link between the satellite and the UE is disconnected.

At operation B, when the satellite flies over the ground network, the satellite establishes a connection with the ground network, so that the satellite communicates with the ground network through the feeder link.

The main application scenarios of 5G include: an Enhanced Mobile Broadband (eMBB), an Ultra Reliable Low Latency Communication (URLLC), and massive Machine Type of Communication (mMTC).

For the satellite access system working in the store and forward mode, the satellite needs to store the transmitted data correspondingly when one link is connected, and then forward the stored data when another link is connected. Compared with the ordinary satellite operation mode, the store and forward mode will introduce larger service latency. This operation mode is mainly suitable for services that are not sensitive or strict to the latency requirements, and thus cannot meet the latency requirements of services with high latency requirements. Therefore, how to control the data transmission in the store and forward mode is an urgent problem to be solved.

For convenience of understanding the technical solutions of the embodiments of the disclosure, the technical solutions of the disclosure will be described in detail below with reference to specific embodiments. The above related technologies may be used as alternative solutions and may be combined with the technical solutions of the embodiments of the disclosure in various ways, all of which belong to the scope of protection of the embodiments of the disclosure. The embodiments of the disclosure include at least part of the following contents.

As illustrated in FIG. 8, the method for transmission control provided in an embodiment of the disclosure, which is applied to a terminal device, includes the following operation S801.

At the operation S801, the terminal device receives first configuration information, where the first configuration information is used for indicating whether data of a first service or a first RB is allowed to be transmitted using a store and forward mode of a satellite.

As illustrated in FIG. 9, the method for transmission control provided in an embodiment of the disclosure, which is applied to a network device, includes the following operation S901.

At the operation S901, the network device transmits first configuration information, where the first configuration information is used for indicating whether data of a first service or a first RB is allowed to be transmitted using a store and forward mode of a satellite.

As illustrated in FIG. 10, the method for transmission control provided in an embodiment of the disclosure, which is applied to a communication system including a terminal device and a network device, includes the following operations S1001 and S1002.

At the operation S1001, the network device transmits first configuration information.

At the operation S1002, the terminal device receives the first configuration information.

The first configuration information is used for indicating whether data of a first service or a first RB is allowed to be transmitted using a store and forward mode of a satellite.

The method for transmission control illustrated in FIGS. 8, 9 and 10 will be described below.

The network device configures first configuration information for the terminal device, and transmits the first configuration information to the terminal device. The first configuration information is used for indicating whether data of a first service or a first RB is allowed to be transmitted using a store and forward mode of a satellite.

The first service is one of the services of the terminal device. The first RB is an RB corresponding to the first service, that is, one of the RBs of the terminal device. The first configuration information is used for indicating whether data of the first service is allowed to be transmitted using the store and forward mode of the satellite, which can be understood as that the first configuration information indicates, based on the service, whether data is allowed to be transmitted using the store and forward mode of the satellite. The first configuration information is used for indicating whether data of the first RB is allowed to be transmitted using the store and forward mode of the satellite, which can be understood as that the first configuration information indicates, based on the RB, whether data is allowed to be transmitted using the store and forward mode of the satellite.

The first configuration information may be used for indicating whether data of each service in partial services or each RB in partial RBs of the terminal device is allowed to be transmitted using the store and forward mode of the satellite, or may be used for indicating whether all services of the terminal device, or each service in an RB, or data of the RB is allowed to be transmitted using the store and forward mode of the satellite.

As an example, the first configuration information can be used to configure whether data of each service in the partial services of the terminal device is allowed to be transmitted using the store and forward mode of the satellite. The services of the terminal device include: service1, service2, and service3, and the first configuration information is used for indicating whether the data of the service1 and the service2 are allowed to be transmitted using the store and forward mode of the satellite. Herein, the first service may be the service 1 or the service2.

As an example, the first configuration information can be used to configure whether data of each RB in the partial RBs of the terminal device is allowed to be transmitted using the store and forward mode of the satellite. The services of the terminal device include: RB1, RB2, and RB3, and the first configuration information is used for indicating whether the data of the RB1 and the RB2 are allowed to be transmitted using the store and forward mode of the satellite. Herein, the first service may be the RB 1 or the RB2.

As an example, the first configuration information can be used to configure whether data of each service in all services of the terminal device is allowed to be transmitted using the store and forward mode of the satellite. The services of the terminal device include: service1, service2, and service3, and the first configuration information is used for indicating whether the data of the service1, the service2 and the service3 are allowed to be transmitted using the store and forward mode of the satellite. Herein, the first service may be the service1 or the service2 or the service3.

As an example, the first configuration information can be used to configure whether data of each RB in the partial RBs of the terminal device is allowed to be transmitted using the store and forward mode of the satellite. The services of the terminal device include: RB1, RB2, and RB3, and the first configuration information is used for indicating whether the data of the RB1, the RB2 and the RB3 are allowed to be transmitted using the store and forward mode of the satellite. Herein, the first service may be the RB1 or the RB2 or the RB3.

The service of the terminal device may be understood as a service supported by the terminal device, and the RB of the terminal device may be understood as an RB corresponding to the service supported by the terminal device, that is, an RB carrying the service.

The first configuration information may indicate that data of the first service or the first RB is allowed to be transmitted using the store and forward mode of the satellite, or is not allowed to be transmitted using the store and forward mode of the satellite. If the data of the first service or the first RB is allowed to be transmitted using the transmission and forward mode of the satellite, then the data of the first service or the first RB is allowed to be transmitted after a service link is established between the terminal device and the satellite operating in the store and forward mode. If the data of the first service or the first RB is not allowed to be transmitted using the transmission and forward mode of the satellite, then the data of the first service or the first RB is not allowed to be transmitted to the satellite after a service link is established between the terminal device and a satellite operating in the store and forwarding mode.

It can be understood that the data of the first service or the first RB is not allowed to be transmitted using the store and forward mode of the satellite, which can be described as that the data of the first service or the first RB is prohibited from being transmitted using the store and forward mode of the satellite.

In a case where the terminal device is located within coverage of the satellite operating in the store and forward mode, the terminal device determines whether to transmit the data of the first service or the first RB based on the received first configuration information. Herein, the terminal device transmits the data to the satellite using a service link with the satellite.

In some embodiments, the first configuration information may be configured based on a latency requirement for services.

In an example, for a service with a low latency requirement or an RB corresponding to the service, the first configuration information may indicate that data of the service or the RB is allowed to be transmitted using the store and forward mode of the satellite. For a service with a high latency requirement or an RB corresponding to the service, the first configuration information may indicate that data of the service or the RB is not allowed to be transmitted using the store and forward mode of the satellite. Herein, when the latency requirement of the service is higher than a set latency threshold, the service has the low latency requirement, and when the latency requirement of the service is lower than or equal to the set latency threshold, the service has the high latency requirement.

In the methods for transmission control according to the embodiments of the disclosure, a network device transmits first configuration information to a terminal device, and the terminal device receives the first configuration information, where the first configuration information is used for indicating whether data of a first service or a first RB is allowed to be transmitted using a store and forward mode of a satellite, so that the terminal device, in the NTN network, can control whether data can be transmitted to the satellite in the store and forward mode based on the first configuration information, thereby realizing the control of the data transmission in the store and forward mode.

In the embodiment of the disclosure, the first configuration information indicates whether the data is allowed to be transmitted using the store and forward mode of the satellite by using one of the following indication manners.

In a first indication manner, the first configuration information indicates, based on services, whether the data is allowed to be transmitted using the store and forward mode of the satellite.

In a second indication manner, the first configuration information indicates, based on RBs, whether the data is allowed to be transmitted using the store and forward mode of the satellite.

When the first configuration information is configured using the first indication manner, the first configuration information is used for indicating whether the data of the first service is allowed to be transmitted using the store and forward mode of the satellite.

When the first configuration information is configured using the second indication manner, the first configuration information is used for indicating whether the data of the first RB is allowed to be transmitted using the storage and forwarding mode of the satellite.

### For the first indication manner

In some embodiments, if the first configuration information is used for indicating whether the data of the first service is allowed to be transmitted using the store and forward mode of the satellite, the first configuration information is configured by a core network device.

In a case where the first configuration information is configured by the core network device, the core network device configures the first configuration information and transmits the first configuration information to a base station, the base station transmits the first configuration information to a terminal device, and the terminal device receives the first configuration information from the core network device.

In some embodiments, the first configuration information includes first indication information corresponding to each of services of the terminal device, the first indication information is used for indicating whether data of a respective service is allowed to be transmitted using the store and forward mode of the satellite, where the services of the terminal device include the first service.

The core network configures the first indication information for each of the services of the terminal device, to indicate whether the data of respective services is allowed to be transmitted using the store and forward mode of the satellite.

In an example, the services of the terminal device include: service1 and service2, and the core network configures indication information A and indication information B for the service1 and the service2, respectively. The indication information A is used for indicating whether data of the service1 is allowed to be transmitted using the store and forward mode of the satellite, and the indication information B is used for indicating whether data of the service2 is allowed to be transmitted using the store and forward mode of the satellite.

In some embodiments, for a service, the first indication information corresponding to the service may be included in service configuration information of the service. It is understood that the first indication information corresponding to different services may be included in the service configuration information of the corresponding services.

The core network device may add a first number of bits of information into the service configuration information corresponding to each service, and the first number of bits of information is the first indication information. In an example, the first number is 1.

In some embodiments, the first indication information is configured for a Quality of Service (QoS) flow corresponding to the service.

Alternatively, the first indication information is configured for an Evolved Packet System (EPS) bearer corresponding to the service.

For the 5G network, the core network device configures, for a QoS flow corresponding to each service, whether the QoS flow is allowed to be transmitted using the store and forward mode. Optionally, the core network device is a SMF.

For the 4G network, the core network device configures, for an Evolved Packet System (EPS) bearer corresponding to each service, whether the EPS bearer is allowed to be transmitted using the store and forward mode. Optionally, the core network device is a Mobility Management Entity (MME).

In the embodiment of the disclosure, the first indication manner is applicable to at least one of the following Radio Resource Control (RRC) states: an idle state (RRC_IDLE), a connected state (RRC_CONNECTED), or an inactive state (RRC_INACTIVE).

In RRC_IDLE state, there is no RRC connection, the mobility is based on a cell selection or reselection of the terminal device, the paging is initiated by the core network, the paging area is configured by the core network, and there is no UE AS context at the base station side.

In RRC_CONNECTED state, there is an RRC connection, UE AS context exists at both the base station and the UE, the network side knows that a location of the UE is specifically at a cell level, and the mobility is controlled by the network side. The unicast data may be transmitted between the UE and the base station.

In RRC_INACTIVE state, the mobility is based on a cell selection or reselection of the terminal device, there is a connection between the core network and the base station, the UE AS context exists on a certain base station, the paging is triggered by the base station, the paging area based on the base station is managed by the base station, and the network side knows that the location of the terminal device is based on a level of the paging area of the base station.

### For the second indication manner

In some embodiments, if the first configuration information is used for indicating whether data of the first RB is allowed to be transmitted using the store and forward mode of the satellite, the first configuration information is configured by a base station.

In a case where the first configuration information is configured by a base station, the base station configures the first configuration information and transmits the first configuration information to a terminal device, and the terminal device receives the first configuration information from the base station.

For the second indication manner, the first configuration information includes one of the following cases.

In the first case, the first configuration information includes second indication information corresponding to each of RBs of the terminal device, and the second indication information is used for indicating whether data of a respective RB is allowed to be transmitted using the store and forward mode of the satellite, where the RBs of the terminal device include the first RB.

In the second case, the first configuration information includes a first RB list, and data of RB(s) in the first RB list is allowed to be transmitted using the store and forward mode of the satellite.

In the third case, the first configuration information includes a second RB list, and data of RB(s) in the second RB list is not allowed to be transmitted using the store and forward mode of the satellite.

For the first case, the base station configures the second indication information for each of the RBs of the terminal device, to indicate whether data of the respective RB is allowed to be transmitted using the store and forward mode of the satellite.

In an example, the RBs of the terminal device include: RB1 and RB2, and the base station configures indication information C and indication information D for the RB1 and the RB2, respectively. The indication information C is used for indicating whether data of the RB1 is allowed to be transmitted using the store and forward mode of the satellite, and the indication information D is used for indicating whether data of the RB2 is allowed to be transmitted using the store and forward mode of the satellite.

In some embodiments, for an RB, the second indication information corresponding to the RB may be included in the RB configuration information of the RB. It is understood that the second indication information corresponding to different RBs may be included in the RB configuration information of the corresponding RBs.

The base station may add a second number of bits of information into the RB configuration information corresponding to each RB, and the second number of bits of information is the second indication information. In an example, the second number is 1.

For the second case, the base station determines whether data of each RB in the RBs of the terminal is allowed to be transmitted using the store and forward mode of the satellite, and for a RB whose data is allowed to be transmitted using the store and forward mode of the satellite, adds the RB to the first RB list. All the RB(s) in the first RB list is RB(s) whose data is allowed to be transmitted using the store and forward mode of the satellite.

After receiving the first RB list, the terminal device determines that the data of the RB(s) in the first RB list is allowed to be transmitted using the store and forward mode of the satellite, and determines that the data of the RB not included in the first RB list of the terminal device is not allowed to be transmitted using the store and forward mode of the satellite.

For the third case, the base station determines whether data of each RB in the RBs of the terminal is allowed to be transmitted using the store and forward mode of the satellite, and for a RB whose data is not allowed to be transmitted using the store and forward mode of the satellite, adds the RB to the second RB list. All the RB(s) in the first RB list is RB(s) whose data is not allowed to be transmitted using the store and forward mode of the satellite.

After receiving the second RB list, the terminal device determines that the data of the RB(s) in the second RB list is not allowed to be transmitted using the store and forward mode of the satellite, and determines that the data of the RB(s) not included in the second RB list of the terminal device is allowed to be transmitted using the store and forward mode of the satellite.

It is understood that the first configuration information may include at least one of the first RB list and the second RB list.

Taking that the first configuration information includes only the first RB list as an example, if the first RB is included in the first RB list, the data of the first RB is allowed to be transmitted using the store and forward mode of the satellite, and if the first RB is not included in the first RB list, the data of the first RB is not allowed to be transmitted using the store and forward mode of the satellite.

Taking that the first configuration information includes only the second RB list as an example, if the first RB is included in the second RB list, the data of the first RB is not allowed to be transmitted using the store and forward mode of the satellite, and if the first RB is not included in the first RB list, the data of the first RB is allowed to be transmitted using the store and forward mode of the satellite.

Taking that the first configuration information includes both the first RB list and the second RB list as an example, if the first RB is included in the first RB list, the data of the first RB is allowed to be transmitted using the store and forward mode of the satellite, and if the first RB is included in the second RB list, the data of the first RB is not allowed to be transmitted using the store and forward mode of the satellite.

In some embodiments, if the first configuration information is used for indicating whether the data of the first RB is allowed to be transmitted using the store and forward mode of the satellite, the first configuration information is included in an RRC connection release message.

In the embodiments of the disclosure, the second indication manner is applicable to the RRC_INACTIVE state, and when releasing the terminal device to the RRC_INACTIVE state, the base station configures the first configuration information for the terminal device, and carries the first configuration information in an RRC connection release message and transmits it to the terminal device. Herein, the RRC connection release message is used to release the RRC connection between the terminal device and the base station.

In some embodiments, the first configuration information is used for indicating that the data of the first service or the first RB is allowed to be transmitted using the store and forward mode of the satellite. The method further includes the following operations.

If the terminal device is located within coverage of a first satellite operating in the store and forward mode, and first data to be transmitted is present in the first service or the first RB, the terminal device transmits the first data.

If the terminal device is located within coverage of a first satellite operating in the store and forward mode, a service link between the terminal device and the first satellite can be used for communication between the terminal device and the first satellite.

In a case where the service link between the terminal device and the first satellite is available, if the first configuration information indicates that the data of the first service or the first RB is allowed to be transmitted using the store and forward mode of the satellite, and first data to be transmitted is present in the first service or the first RB, the terminal device transmits the first data to the first satellite through the service link. It can be understood that when the service link between the terminal device and the first satellite is established, a feeder link between the first satellite and the ground gateway is not established, and the first satellite stores the received first data. When the feeder link between the first satellite and the ground gateway is available, the first satellite transmits the first data to the ground gateway through the feeder link.

For a service or an RB, the data of the service or the RB is allowed to be transmitted using the store and forward mode of the satellite, and the service or the RB may be referred to as an allowed service or an allowed RB. The data of the service or the RB is not allowed to be transmitted using the store and forward mode of the satellite, and the service may be referred to as a prohibited service or a prohibited RB.

It can be understood that when the terminal device is located within the coverage of the first satellite, if the terminal device has at least one allowed service or allowed RB with data to be transmitted, the terminal device transmits the data to be transmitted of the at least one allowed service or allowed RB.

In some embodiments, when the terminal device is in a non-connected state, the terminal device transmits the first data, which includes one of the following operations.

The terminal device transmits the first data in a manner of small data.

Alternatively, the terminal device initiates an RRC connection establishment or resume procedure, and transmits the first data through an RRC connection established or resumed by the RRC connection establishment or resume procedure.

The non-connected state includes RRC_IDLE state and RRC_INACTIVE state.

If the terminal device is in a non-connected state or RRC_INACTIVE state, the terminal device may transmit the first data to the first satellite in a manner of small data, where the small data may be understood as data whose data amount is smaller than a set amount. The small data transmission does not require the terminal device to establish/resume the RRC connection with the first satellite, but maintains the RRC non-connected state to communicate with the satellite, thereby reducing the latency and signaling overhead in establishing/resuming the RRC connection.

If the terminal device is in a non-connected state or an active state, the terminal device may establish an RRC connection with the first satellite through an RRC connection establishment or resume procedure to enter the connected state, and transmit the first data to the first satellite based on the established RRC connection in the connected state. After switching from the non-connected state to the connected state, the terminal device may transmit the first data to the first satellite based on the first uplink resource allocated by the network device.

In some embodiments, when the terminal device is in a connected state, the terminal device transmits the first data, which includes the following operation.

The terminal device transmits the first data based on a first uplink resource, where the first uplink resource is allocated by a network device.

When the terminal device is in the connected state, the terminal device transmits the first data to the first satellite based on the first uplink resource allocated by the network device.

In some embodiments, the method further includes the following operation.

The terminal device receives third indication information, where the third indication information is used for indicating whether the first satellite operates in the store and forward mode.

When the terminal device is located within the coverage of the first satellite, the terminal device receives third indication information transmitted by the base station or the first satellite. Herein, when the first satellite has a complete base station function, the terminal device receives the third indication information transmitted by the first satellite. When the first satellite does not have a complete base station function, the terminal device receives the third indication information transmitted by the base station.

If the first satellite has the complete base station function, the first satellite determines the third indication information and transmits the third indication information to the terminal device.

If the first satellite does not have the complete base station function, the base station determines the third indication information and transmits the third indication information to the first satellite, and the first satellite forwards the third indication information to the terminal device.

Here, for the network device, the method further includes the following operation.

The network device transmits third indication information, where the third indication information is used for indicating whether the first satellite operates in the store and forward mode, and a terminal device configured with the first configuration information is located within coverage of the first satellite.

It can be understood that the network device is a ground base station, and the ground base station determines the third indication information and transmits the third indication information to the first satellite, then the first satellite forwards the third indication information to the terminal device located in the coverage of the first satellite. Alternatively, the network device is the first satellite (in this case, the first satellite has a base station function), the first satellite determines the third indication information, and transmits the third indication information to the terminal device located in the coverage of the first satellite.

In some embodiments, the third indication information is transmitted through a system message transmitted by a base station or the first satellite.

When the first satellite does not have a complete base station function, the third indication information is transmitted through the system message transmitted by the base station. In this case, the base station transmits the system message carrying the third indication information, and the system message carrying the third indication information is received by the first satellite, the first satellite forwards the received system message to the terminal device, and the terminal device receives the third indication information based on the system message.

When the first satellite has the complete base station function, the third indication information is transmitted through the system message transmitted by the first satellite. In this case, the first satellite issues a system message carrying the third indication information, and the system message carrying the third indication information is received by the terminal device, and the terminal device receives the third indication information based on the system message.

In some embodiments, segmentation transmission is not supported for the first data.

For the first satellite operating in the store and forward mode, if it does not support receiving data of the segmentation transmission, then the segmentation transmission is not supported for the first data transmitted by the terminal device to the first satellite.

The segmentation manner of the segmentation transmission may include an Internet Protocol (IP) packet segmentation or a Radio Link Control (RLC) layer Service Data Unit (SDU) segmentation, that is, an RLC SDU segmentation.

In some embodiments, data transmitted by the terminal device merely includes data allowed to be transmitted, where the data allowed to be transmitted is data of a service or RB allowed to be transmitted, and the service or the RB allowed to be transmitted is a service or RB indicated by the first configuration information as being allowed to use the store and forward mode of the satellite.

In an embodiment of the disclosure, the terminal device is located within the coverage of the first satellite, and the data transmitted to the first satellite merely includes the data of the allowed service or the allowed RB, but does not include data of the prohibited service or the prohibited RB.

The terminal device is located within the coverage of the first satellite, it is determined that whether there is data to be transmitted in the allowed services or the allowed RBs, and if so, the data to be transmitted in the services or the RBs are transmitted. Alternatively, it is determined that among the data to be transmitted, which services or RBs to which the data belong are allowed services or allowed RBs, and these data are transmitted to the first satellite.

For the data to be transmitted in the prohibited services or the prohibited RBs, the terminal device does not transmit the data to be transmitted in these services or RBs when the terminal device is located within the coverage of the first satellite.

If the data to be transmitted does not include data of the allowed services or the allowed RBs, or no data to be transmitted are present in the allowed services or the allowed RBs, the terminal device does not transmit data to the first satellite.

In some embodiments, the method for transmission control provided in the embodiment of the disclosure further includes the following operation.

If the terminal device satisfies a first condition, the terminal device stops transmission of the first data, where the first condition is related to a first data amount, and the first data amount is a maximum received data amount or a maximum received capacity allowed by the first satellite.

The terminal device determines the first condition based on the maximum received data amount or the maximum received capacity allowed by the first satellite, and determines whether the terminal device satisfies the first condition during transmitting the first data. If the first condition is satisfied, the terminal device continues transmitting the first data, and if the first condition is not satisfied, the terminal device stops transmitting the first data.

In some embodiments, if the first data amount is for the terminal device, the first condition includes a condition A: data amount of data transmitted by the terminal device reaches the first data amount. Alternatively, if the first data amount is for the first service or the first RB, the first condition is a condition B: data amount of data in the first service or in the first RB transmitted by the terminal device reaches the first data amount.

If the first data amount is for the terminal device, the terminal device determines whether the data amount of data in the allowed services or the allowed RBs transmitted by the terminal device reaches the first data amount If the first data amount is not reached, the terminal device continues transmitting the uplink data, and if the first data amount is reached, the terminal device stops transmitting the uplink data. In this case, the terminal device controls the amount of data to be transmitted based on the terminal device itself, but does not pay attention to the service or RB to which the data to be transmitted belongs.

If the first data amount is for the first service or the first RB, the terminal device determines whether the data amount of data of the transmitted first service or the first RB reaches the first data amount, if the first data amount is not reached, the terminal device continues transmitting the first data of the first service or the first RB, and if the first data amount is reached, the terminal device stops transmitting the first data of the first service or the first RB. In this case, the terminal device controls the amount of data to be transmitted based on the service or the RB, but does not pay attention to the amount of data to be transmitted by the terminal device.

It can be understood that if the first data amount is for the first service or the first RB, and different services or different RBs may correspond to different maximum received data amounts or maximum received capacities, then the maximum received data amount or maximum received capacity is configured for the services or the RBs.

In the embodiment of the disclosure, the terminal device may include a first number for the terminal device and a first number for the first service or the first RB. When transmitting the first data, the first condition for determining whether to stop transmitting the first data includes a condition A and a condition B, and if the condition A or the condition B is satisfied, the terminal device stops transmitting the first data.

It should be noted that, in a case where the first configuration information is indicated by the first indication manner, the maximum received data amount or the maximum received capacity may be configured for the terminal device, the services, or the RBs. In a case where the first configuration information is indicated by the second indication manner, the maximum received data amount or the maximum received capacity may be configured for the terminal device, the services, or the RBs.

In some embodiments, the method further includes that: the terminal device receives second configuration information, where the second configuration information is used for indicating the first data amount.

It can be understood that in a case where the first data amount is for the terminal device, the second configuration information may be configuration information for the terminal device. In a case where the first data amount is for the first service or the first RB, the second configuration information is service configuration information for the first service or RB configuration information for the first RB.

The terminal device may receive the second configuration information transmitted by the base station or the first satellite.

In a case where the terminal device receives the second configuration information transmitted by the base station, the network device further performs the following operation.

The network device transmits second configuration information, and the second configuration information is used for indicating a first data amount, where the first data amount is a maximum received data amount or a maximum received capacity allowed by the first satellite, a first condition determined based on the first data amount is used for controlling the terminal device to stop transmission of the first data, and the first data is to-be-transmitted data for the first service or the first RB.

The network device includes the base station.

In some embodiments, the second configuration information is transmitted through at least one of: a broadcast message; or a dedicated message.

The second configuration information may be notified by the base station or the first satellite to the terminal device through the broadcast message or the dedicated message.

The dedicated message may be understood as a message specific to the terminal device. In an example, the dedicated message is an RRC dedicated signaling specific to the terminal device.

In some embodiments, the method further includes the following operations.

The terminal device receives fourth indication information, where the fourth indication information is related to a stored data amount of the first satellite.

The terminal device stops transmission of uplink data based on the fourth indication information.

The base station or the first satellite determines that the first satellite satisfies a second condition, where the second condition is related to the stored data amount of the first satellite, and then transmits the fourth indication information to the terminal device to indicate that the first satellite satisfies the second condition. When the first satellite satisfies the second condition, it indicates that the first satellite cannot continue to store the data currently transmitted by the terminal device.

The terminal device receives the fourth indication information transmitted by the base station or the first satellite, and determines that the first satellite satisfies the second condition. Then, the terminal device stops transmitting data to the first satellite.

In a case where the terminal device receives the fourth indication information transmitted by the base station, the network device further performs the following operation.

The network device transmits the fourth indication information, where the fourth indication information is related to a stored data amount of the first satellite. The fourth indication information is used for controlling the terminal device to stop transmission of data.

The network device includes the base station.

In some embodiments, the fourth indication information is used for indicating one of a condition A, a condition B, a condition C or a condition D.

For the condition A, the stored data amount of the first satellite reaches a second data amount, where the second data amount is a maximum amount of data the first satellite is allowed to store.

For the condition B, a stored data amount of the first satellite for the terminal device reaches a third data amount, where the third data amount is a maximum amount of data the first satellite is allowed to store for the terminal device.

For the condition C, a stored data amount of the first satellite for the first service of the terminal device reaches a fourth data amount, where the fourth data amount is a maximum amount of data the first satellite is allowed to store for the first service of the terminal device.

For the condition D, a stored data amount of the first satellite for the first service reaches a fifth data amount, where the fifth data amount is a maximum amount of data the first satellite is allowed to store for the first service.

When the fourth indication information indicates the condition A or the condition B, the terminal stops transmission of the current uplink data.

When the fourth indication information indicates the condition C or the condition D, the terminal stops transmission of the current first service, but it does not affect the data transmission of the allowed services.

In some embodiments, the fourth indication information is transmitted through at least one of: a broadcast message; or a dedicated message.

The fourth indication information may be notified by the base station or the first satellite to the terminal device through the broadcast message or the dedicated message.

The dedicated message may be understood as a message specific to the terminal device. In an example, the dedicated message is an RRC dedicated signaling specific to the terminal device.

It is understood that the second configuration information and the fourth indication information may be notified to the terminal device through the same message, or may be notified to the terminal device through separate messages, respectively.

The method for transmission control provided in the embodiment of the disclosure may be applied to at least the following scenarios.

At a first scenario, the core network configures the first configuration information for the terminal device based on services, and the core network transmits the first configuration information to the terminal device. The terminal device transmits the first data to the first satellite based on the first configuration information, the terminal device receives the second configuration information transmitted by the base station or the first satellite, and stops transmitting the first data based on the second configuration information.

At a second scenario, the base station configures the first configuration information for the terminal device based on RBs, and the base station transmits the first configuration information to the terminal device. The terminal device transmits first data to the first satellite based on the first configuration information, and the terminal device receives the second configuration information transmitted by the base station or the first satellite, and stops transmitting the first data based on the second configuration information.

At a third scenario, the core network configures the first configuration information for the terminal device based on services, and the core network transmits the first configuration information to the terminal device. The terminal device transmits the first data to the first satellite based on the first configuration information, the terminal device receives the fourth indication information transmitted by the base station or the first satellite, and stops the transmission of the uplink data or the first data based on the second configuration information.

At a fourth scenario, the base station configures the first configuration information for the terminal device based on RBs, and the base station transmits the first configuration information to the terminal device. The terminal device transmits the first data to the first satellite based on the first configuration information, the terminal device receives the fourth indication information transmitted by the base station or the first satellite, and stops the transmission of the uplink data or the first data based on the fourth indication configuration information.

It can be understood that the solutions of the first scenario, the second scenario, the third scenario, and the fourth scenario can be combined without conflict.

The method for transmission control provided in the embodiments of the disclosure will be described below.

The method for transmission control provided in the embodiments of the disclosure can be implemented as, but is not limited to, the following first and second embodiments.

### First Embodiment

For the satellite access system using the store and forward operation mode, a core network configures, for each service of a terminal device, identification information of "whether the service is allowed to be transmitted using the store and forward mode", and only for the services configured as "allowed to be transmitted using the store and forward mode", data transmission can be performed using the store and forward mode.

For the satellite access system supporting the store and forward operation mode, UE receives first configuration information from the core network, where the first configuration information includes: for each service of the UE, identification information of whether the service is allowed to be transmitted using the store and forward mode. For example, for the 5G network, the SMF configures, for each QoS flow, whether the QoS flow is allowed to be transmitted using the store and forward mode. For another example, for the 4G network, the MME configures, for each EPS bearer, whether the EPS bearer is allowed to be transmitted using the store and forward mode.

When the satellite flies over the UE (i.e., the satellite can cover the location/area at which the UE locates), the UE reads the system message forwarded by the satellite (from the ground base station) or issued by the satellite (e.g., the satellite has a complete base station function), and the system message includes indication information of whether the satellite operates in the store and forward operation mode. If the satellite is currently operating in the store and forward mode and at least one service, among the services of the UE configured to be allowed to be transmitted using the store and forward mode, currently has data to be transmitted, then: a) if the UE is currently in an RRC non-connected state (such as RRC_IDLE or RRC_INACTIVE), the UE performs data transmission in a manner of small data, or the UE initiates RRC connection establishment first, and then performs data transmission based on uplink resources allocated by the network; b) if the UE is currently in the RRC connected state, the UE performs data transmission based on the uplink resources allocated by the network.

The data transmitted by the UE is limited to data corresponding to a service(s) configured to be allowed to be transmitted using the store and forward mode.

For the uplink data transmission using the store and forward mode, the terminal controls the data to be transmitted through the introduced "maximum received data amount or maximum received capacity allowed for the satellite".

The maximum received data amount or the maximum received capacity may be UE-based (i.e., the maximum amount of data that can be transmitted per UE), or may be service-based or RB-based (i.e., the maximum amount of data that can be transmitted per service per UE).

The maximum received data amount or the maximum received capacity may be notified to the UE by the base station/satellite through broadcast or UE-specific RRC signaling.

Optionally, for the store and forward operation mode, the segmentation transmission of IP packets or RLC SDUs is not supported.

When receiving the indication of "maximum capacity/data amount of the satellite is reached" from the base station/satellite, the UE stops the uplink data transmission. Herein, the "maximum capacity/data amount of the satellite is reached" may mean that: the total stored data amount of the satellite reaches the maximum capacity, or the stored data amount of the satellite for the UE reaches the maximum capacity, or the stored data amount of the satellite for a certain service/RB of the UE reaches the maximum capacity.

The indication of "maximum capacity/data amount of the satellite is reached" may be notified by the base station/satellite to the UE through broadcast or UE-specific RRC signaling.

### Second Embodiment

For the satellite access system using the store and forward operation, when the base station is to release the UE to the RRC_INACTIVE state, the base station configures, for each RB of the UE, identification information of "whether the RB is allowed to be transmitted using the store and forward mode", and only for the RBs configured as "allowed to be transmitted using the store and forward mode", data transmission can be performed using the store and forward mode.

For the satellite access system supporting the store and forward operation, when the base station is to release the UE to the RRC_INACITVE state, the base station configures the following information for the UE through the RRC release message: for each RB of the UE, identification information of whether the RB is allowed to be transmitted using the store and forward mode configured, or a list of RBs allowed to be transmitted using the store and forward mode configured for the UE.

When the satellite flies over the UE (i.e., the satellite can cover the location/area at which the UE locates), the UE reads the system message forwarded by the satellite (from the ground base station) or issued by the satellite (e.g., the satellite has a complete base station function), and the system message includes indication information of whether the satellite operates in the store and forward operation mode. If the satellite is currently operating in the store and forward mode, and at least one RB, among the RBs of the UE configured to be allowed to be transmitted using the store and forward mode, currently has data to be transmitted, then the UE performs data transmission in a manner of small data, or the UE initiates the RRC connection resume first, and then performs the data transmission based on the uplink resources allocated by the network. Herein, the data transmitted by the UE is limited to data corresponding to the RB(s) configured to be allowed to be transmitted using the store and forward mode.

For the uplink data transmission using the store and forward mode, the terminal controls the data to be transmitted through the introduced "maximum received data amount or maximum received capacity allowed by the satellite".

The maximum received data amount or the maximum received capacity may be UE-based (i.e., the maximum amount of data that can be transmitted per UE), or may be service-based or RB-based (i.e., the maximum amount of data that can be transmitted per service per UE).

The maximum received data amount or the maximum received capacity may be notified to the UE by the base station/satellite through broadcast or UE-specific RRC signaling.

Optionally, for the store and forward operation mode, the segmentation transmission of IP packets or RLC SDUs is not supported.

When receiving the indication of "maximum capacity/data amount of the satellite is reached" from the base station/satellite, the UE stops the uplink data transmission. Herein, the "maximum capacity/data amount of the satellite is reached" may mean that: the total stored data amount of the satellite reaches the maximum capacity, or the stored data amount of the satellite for the UE reaches the maximum capacity, or the stored data amount of the satellite for a certain service/RB of the UE reaches the maximum capacity.

The indication of "maximum capacity/data amount of the satellite is reached" may be notified by the base station/satellite to the UE through broadcast or UE-specific RRC signaling.

In the method for transmission control provided in the embodiments of the disclosure, the core network configures, for each service, identification information of "whether the service is allowed to be transmitted using the store and forward mode", and only for the services configured as "allowed to be transmitted using the store and forward mode", data transmission can be performed using the store and forward mode. When the base station releases the UE to the RRC_INACTIVE state, the base station configures, for each RB of the UE, identification information of "whether the service is allowed to be transmitted using the store and forward mode" or configures a list of RBs that are allowed to be transmitted using the store and forward mode for the UE, and only for the services configured as "allowed to be transmitted using the store and forward mode", data transmission can be performed using the store and forward mode.

In the method for transmission control provided in the embodiments of the disclosure, the UE performs data transmission based on the service type and the satellite storage capacity, so that services are provided as much as possible for latency-insensitive services, and data transmission are prohibited for latency-sensitive services to avoid unnecessary waste of resources.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solutions of the present disclosure, and these simple modifications all fall within the scope of protection of the present disclosure. For example, various specific technical features described in the above specific embodiments may be combined in any suitable manner without conflict. Various possible combinations are not further described in the present disclosure to avoid unnecessary repetition. For another example, various different implementations of the present disclosure can also be combined arbitrarily, which should also be considered as the content disclosed by the present disclosure as long as they do not violate the conception of the present disclosure. For another example, various embodiments described in the present disclosure and/or the technical features in various embodiments can be arbitrarily combined with the related technologies without conflict, and the technical solutions obtained after the combination should also fall within the scope of protection of the present disclosure.

It should also be understood that in the various method embodiments of the present disclosure, the size of the serial numbers of the above-mentioned various processes does not indicate a sequence of execution. The sequence of execution of the processes should be determined by their functions and inherent logics, and should not constitute a limitation on the implementation process of the embodiments of the present disclosure. Further, in embodiments of the present disclosure, the terms "downlink", "uplink" and "sidelink" are used to indicate transmission directions of signals or data. The term "downlink" is used to denote that the transmission direction of the signals or data is a first direction from a station to user equipment in a cell. The term "uplink" is used to denote that the transmission direction of the signals or data is a second direction from the user equipment in the cell to the station. The term "sidelink" is used to denote that the transmission direction of the signals or data is a third direction from first user equipment to second user equipment. For example, "downlink signal" means that the transmission direction of the signal is the first direction. In addition, in the embodiments of the present disclosure, the term "and/or" refers to only an association relationship for describing associated objects and represents that three relationships may exist. Specifically, A and/or B may represent three cases: i.e., only A exists, both A and B exist, and only B exists. Furthermore, character "/" in the disclosure usually represents that previous and next associated objects form an "or" relationship.

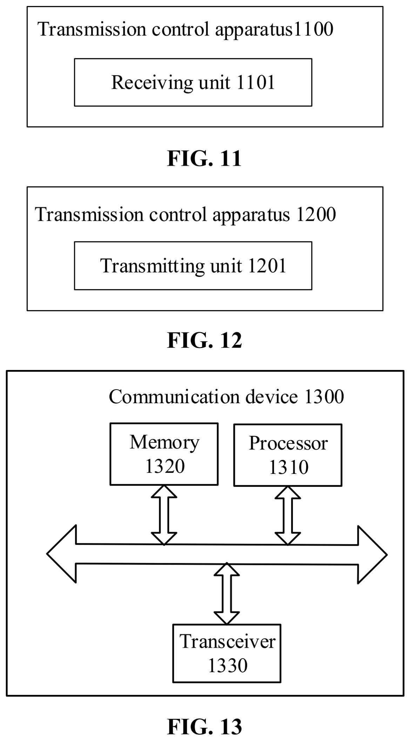

FIG. 11 is a structural diagram of an apparatus for transmission control provided in an embodiment of the disclosure, which is applied to a terminal device. As illustrated in FIG. 11, the apparatus for transmission control 1100 includes a receiving unit 1101.

The receiving unit 1101 is configured to receive first configuration information, where the first configuration information is used for indicating whether data of a first service or a first RB is allowed to be transmitted using a store and forward mode of a satellite.

In some embodiments, when the first configuration information is used for indicating whether the data of the first service is allowed to be transmitted using the store and forward mode of the satellite, the first configuration information is configured by a core network device.

In some embodiments, the first configuration information includes first indication information corresponding to each of services of the terminal device, where the first indication information is used for indicating whether data of a respective service is allowed to be transmitted using the store and forward mode of the satellite, and the services of the terminal device include the first service.

In some embodiments, the first indication information is configured for a QoS flow corresponding to the service; or the first indication information is configured for an EPS bearer corresponding to the service.

In some embodiments, when the first configuration information is used for indicating whether the data of the first RB is allowed to be transmitted using the store and forward mode of the satellite, and the first configuration information is configured by a base station.

In some embodiments, the first configuration information includes second indication information corresponding to each of RBs of the terminal device, where the second indication information is used for indicating whether data of a respective RB is allowed to be transmitted using the store and forward mode of the satellite, and the RBs of the terminal device include the first RB.

In some embodiments, the first configuration information includes a first RB list and/or a second RB list, where data of RB(s) in the first RB list is allowed to be transmitted using the store and forward mode of the satellite, and data of RB(s) in the second RB list is not allowed to be transmitted using the store-and-forward mode of the satellite.

In some embodiments, when the first configuration information is used for indicating whether the data of the first RB is allowed to be transmitted using the store and forward mode of the satellite, the first configuration information is included in an RRC connection release message.

In some embodiments, the apparatus 1100 further includes a data transmitting unit. The first configuration information is used for indicating that the data of the first service or the first RB is allowed to be transmitted using the store and forward mode of the satellite, and the data transmitting unit is configured to transmit the first data when the terminal device is located within a coverage of a first satellite operating in the store and forward mode and first data to be transmitted is present in the first service or the first RB.

In some embodiments, the data transmitting unit is further configured to transmit the first data in a manner of small data when the terminal device is in a non-connected state; or initiate an RRC connection establishment or resume procedure, and transmit the first data through an RRC connection established or resumed by the RRC connection establishment or resume procedure.

In some embodiments, the data transmitting unit is further configured to transmit the first data based on a first uplink resource when the terminal device is in a connected state, where the first uplink resource is allocated by a network device.

In some embodiments, the receiving unit 1101 is further configured to receive third indication information, where the third indication information is used for indicating whether the first satellite operates in the store and forward mode.

In some embodiments, the third indication information is transmitted through a system message transmitted by a base station or the first satellite.

In some embodiments, a segmentation transmission is not supported for the first data.

In some embodiments, data transmitted by the terminal device only includes data allowed to be transmitted, where the data allowed to be transmitted is data of a service or RB allowed to be transmitted, and the service or the RB allowed to be transmitted is a service or RB indicated by the first configuration information as being allowed to use the store and forward mode of the satellite.

In some embodiments, the data transmitting unit is further configured to stop transmission of the first data when the terminal device satisfies a first condition, where the first condition is related to a first data amount, and the first data amount is a maximum received data amount or a maximum received capacity allowed by the first satellite.

In some embodiments, if the first data amount is for the terminal device, the first condition is that an amount of data transmitted by the terminal device reaches the first data amount; or if the first data amount is for the first service or the first RB, the first condition is that an amount of data of the first service or the first RB transmitted by the terminal device reaches the first data amount.

In some embodiments, the receiving unit 1101 is further configured to receive second configuration information, where the second configuration information is used for indicating the first data amount.

In some embodiments, the second configuration information is transmitted through at least one of: a broadcast message; or a dedicated message.

In some embodiments, the receiving unit 1101 is further configured to receive fourth indication information, where the fourth indication information is related to a stored data amount of the first satellite.

In some embodiments, the data transmitting unit is further configured to stop transmission of data based on the fourth indication information.

In some embodiments, the fourth indication information is used for indicating one of the following that: the stored data amount of the first satellite reaches a second data amount, the second data amount being a maximum amount of data the first satellite is allowed to store; a stored data amount of the first satellite for the terminal device reaches a third data amount, the third data amount being a maximum amount of data the first satellite is allowed to store for the terminal device; a stored data amount of the first satellite for the first service of the terminal device reaches a fourth data amount, the fourth data amount being a maximum amount of data the first satellite is allowed to store for the first service of the terminal device; or a stored data amount of the first satellite for the first service reaches a fifth data amount, the fifth data amount is a maximum amount of data the first satellite is allowed to store for the first service.

In some embodiments, the fourth indication information is transmitted through at least one of: a broadcast message or a dedicated message.

FIG. 12 is a structural diagram of an apparatus for transmission control provided in an embodiment of the disclosure, which is applied to a network device. As illustrated in FIG. 12, the apparatus 1200 for transmission control includes a transmitting unit 1201.

The transmitting unit 1201 is configured to transmit first configuration information, where the first configuration information is used for indicating whether data of a first service or a first RB is allowed to be transmitted using a store and forward mode of a satellite.

In some embodiments, when the first configuration information is used for indicating whether the data of the first service is allowed to be transmitted using the store and forward mode of the satellite, the first configuration information is configured by a core network device.

In some embodiments, the first configuration information includes first indication information corresponding to each of services of a terminal device, where the first indication information is used for indicating whether data of a respective service is allowed to be transmitted using the store and forward mode of the satellite, and the services of the terminal device includes the first service.

In some embodiments, the first indication information is configured for a QoS flow corresponding to the service; or the first indication information is configured for an EPS bearer corresponding to the service.

In some embodiments, when the first configuration information is used for indicating whether the data of the first RB is allowed to be transmitted using the store and forward mode of the satellite, the first configuration information is configured by a base station.

In some embodiments, the first configuration information includes second indication information corresponding to each of RBs of a terminal device, where the second indication information is used for indicating whether data of a respective RB is allowed to be transmitted using the store and forward mode of the satellite, and the RBs of the terminal device include the first RB.

In some embodiments, the first configuration information includes a first RB list and/or a second RB list, where data of RB(s) in the first RB list is allowed to be transmitted using the store and forward mode of the satellite, and data of RB(s) in the second RB list is not allowed to be transmitted using the store-and-forward mode of the satellite.

In some embodiments, when the first configuration information is used for indicating whether the data of the first RB is allowed to be transmitted using the store and forward mode of the satellite, the first configuration information is included in an RRC connection release message.

In some embodiments, the transmitting unit 1201 is further configured to transmit third indication information, where the third indication information is used for indicating whether a first satellite operates in the store and forward mode, and a terminal device(s) configured with the first configuration information is located within coverage of the first satellite.

In some embodiments, the third indication information is transmitted through a system message transmitted by a base station.

In some embodiments, the transmitting unit 1201 is further configured to transmit second configuration information, where the second configuration information is used for indicating a first data amount, and the first data amount is a maximum received data amount or a maximum received capacity allowed by the first satellite, a first condition determined through the first data amount is used for controlling the terminal device to stop transmission of first data, and the first data is to-be-transmitted data for the first service or the first RB.

In some embodiments, if the first data amount is for the terminal device, the first condition is that an amount of data transmitted by the terminal device reaches the first data amount; or if the first data amount is for the first service or the first RB, the first condition is that an amount of data of the first service or the first RB transmitted by the terminal device reaches the first data amount.

In some embodiments, the first data amount is transmitted through at least one of: a broadcast message or a dedicated message.

In some embodiments, the transmitting unit 1201 is further configured to transmit fourth indication information, where the fourth indication information is related to a stored data amount of the first satellite, and the fourth indication information is used for controlling the terminal device to stop transmission of data.

In some embodiments, the fourth indication information is used for indicating one of the following that: the stored data amount of the first satellite reaches a second data amount, the second data amount being a maximum amount of data the first satellite is allowed to store; a stored data amount of the first satellite for the terminal device reaches a third data amount, the third data amount being a maximum amount of data the first satellite is allowed to store for the terminal device; a stored data amount of the first satellite for the first service of the terminal device reaches a fourth data amount, the fourth data amount being a maximum amount of data the first satellite is allowed to store for the first service of the terminal device; or a stored data amount of the first satellite for the first service reaches a fifth data amount, the fifth data amount is being maximum amount of data the first satellite is allowed to store for the first service.

In some embodiments, the fourth indication information is transmitted through at least one of: a broadcast message or a dedicated message.

Those skilled in the art would appreciate that the relevant description of the above apparatuses for transmission control according to the embodiments of the present disclosure may be understood with reference to the relevant description of the apparatuses for transmission control according to the embodiments of the present disclosure.

FIG. 13 is a structural diagram of a communication device 1300 provided in an embodiment of the disclosure. The communication device may be a terminal device or a network device. The communication device 1300 illustrated in FIG. 13 may include a processor 1310. The processor 1310 is configured to call and execute the computer program from the memory 1320 to implement the methods in the embodiments of the disclosure.

Optionally, as illustrated in FIG. 13, the communication device 1300 may further include a memory 1320. The processor 1310 is configured to call and execute the computer program from the memory 1320 to implement the methods in the embodiments of the disclosure.

Herein, the memory 1320 may be a separate device independent of the processor 1410 or may be integrated in the processor 1310.

Optionally, as illustrated in FIG. 13, the communication device 1300 may further include a transceiver 1330, and the processor 1310 may control the transceiver 1330 to communicate with other devices. Specifically, the processor 1310 may control the transceiver 1330 to transmit information or data to other devices, or receive information or data from other devices.

The transceiver 1330 may include a transmitter and a receiver. The transceiver 1330 may further include one or more antennas.

Optionally, the communication device 1300 may specifically be the network device in the embodiments of the disclosure, and the communication device 1300 may perform corresponding processes performed by the network device in various methods of the embodiments of the disclosure, which are not elaborated here for the sake of brevity.

Optionally, the communication device 1300 may specifically be the mobile terminal/terminal device in the embodiments of the disclosure, and the communication device 1300 may perform corresponding processes performed by the mobile terminal/terminal device in various methods of the embodiments of the disclosure, which are not elaborated here for the sake of brevity.

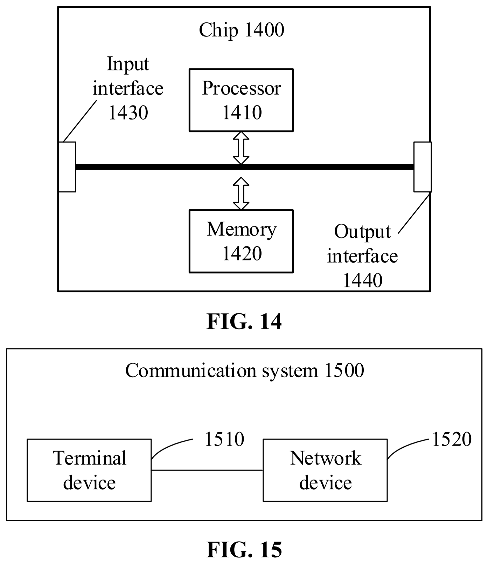

FIG. 14 is a structural diagram of a chip according to an embodiment of the disclosure. The chip 1400 illustrated in FIG. 14 includes a processor 1410, configured to call and execute a computer program from a memory to implement the methods in the embodiments of the disclosure.

Optionally, as illustrated in FIG. 14, the chip 1400 may further include a memory 1420, and the processor 1410 may call and execute a computer program from the memory 1420 to implement the methods in the embodiments of the disclosure.

The memory 1420 may be a separate device independent of the processor 1410, or may be integrated in the processor 1410.

Optionally, the chip 1400 may further include an input interface 1430. The processor 1410 may control the input interface 1430 to communicate with other devices or chips. Specifically, the processor 1410 may control the input interface 1430 to acquire information or data transmitted by other devices or chips.

Optionally, the chip 1400 may further include an output interface 1440. The processor 1410 may control the output interface 1440 to communicate with other devices or chips. Specifically, the processor 1410 may control the output interface 1440 to output information or data to other devices or chips.

Optionally, the chip may be applied to the network device in the embodiments of the disclosure, and the chip may perform corresponding processes performed by the network device in various methods of the embodiments of the disclosure, which are not elaborated here for the sake of brevity.

Optionally, the chip may be applied to the mobile terminal/terminal device in the embodiments of the disclosure, and the chip may perform corresponding processes performed by the mobile terminal/terminal device in various methods of the embodiments of the disclosure, which are not elaborated here for the sake of brevity.

It should be understood that the chip mentioned in the embodiments of the present disclosure may also be referred to as a system-level chip, a system chip, a chip system, or a system-on-chip chip, or the like.

FIG. 15 is a block diagram of a communication system 1500 provided in an embodiment of the disclosure. As illustrated in FIG. 15, the communication system 1500 includes a terminal device 1510 and a network device 1520.

The terminal device 1510 may be used for performing corresponding functions performed by the terminal device in the above methods, and the network device 1520 may be used for performing corresponding functions performed by the network device in the above methods, which are not elaborated here for the sake of brevity.

It can be understood that the processor in the embodiments of the disclosure may be an integrated circuit chip having signal processing capability. In implementation, the various operations of the above method embodiments may be accomplished by integrated logic circuit of hardware or instructions in the form of software in a processor. The processor, described above may be a general purpose processor, a Digital Signal Processor (DSP), an Application Specific Integrated Circuit (ASIC), a Field Programmable Gate Array (FPGA) or other programmable logic devices, discrete gate or transistor logic devices, or discrete hardware components. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads information in the memory and completes the operations of the above methods in combination with its hardware.

It is understood that the memory in the embodiments of the present disclosure may be volatile memory or non-volatile memory or may include both volatile and non-volatile memory. The non-volatile memory may be an ROM, a PROM, an Erasable PROM (EPROM), an EEPROM, or a flash memory. The volatile memory may be an RAM which serves as an external cache. By way of illustration but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memories.

It should be understood that the memory described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

An embodiment of the disclosure also provides a computer readable storage medium for storing a computer program.

Optionally, the computer readable storage medium may be applied to the network device in the embodiments of the disclosure, and the computer program causes the computer to execute corresponding processes implemented by the network device in various methods of the embodiments of the disclosure, which are not elaborated here for the sake of brevity.

Optionally, the computer readable storage medium may be applied to the mobile terminal/terminal device in the embodiments of the disclosure, and the computer program causes the computer to execute corresponding processes implemented by the mobile terminal/terminal device in various methods of the embodiments of the disclosure, which are not elaborated here for the sake of brevity.

An embodiment of the disclosure further provides a computer program product including computer program instructions.

Optionally, the computer program product may be applied to the network device in the embodiments of the disclosure, and the computer program instructions cause the computer to execute corresponding processes performed by the network device in various methods of the embodiments of the present disclosure, which are not elaborated here for the sake of brevity.

Optionally, the computer program product may be applied to the mobile terminal/terminal device in the embodiments of the disclosure, and the computer program instructions cause the computer to execute corresponding processes performed by the mobile terminal/terminal device in various methods of the embodiments of the present disclosure, which are not elaborated here for the sake of brevity.

An embodiment of the disclosure further provides a computer program.

Optionally, the computer program may be applied to the network device in the embodiments of the disclosure, and the computer program causes a computer to execute corresponding processes performed by the network device in various methods of the embodiments of the present disclosure when the computer program is run on the computer, which are not elaborated here for the sake of brevity.

Optionally, the computer program may be applied to the mobile terminal/terminal device in the embodiments of the disclosure, and the computer program causes a computer to execute corresponding processes performed by the mobile terminal/terminal device in various methods of the embodiments of the present disclosure when the computer program is run on the computer, which are not elaborated here for the sake of brevity.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use a different method for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided in the present disclosure, it should be understood that the disclosed systems, devices and methods may be implemented in other ways. For example, the above-described embodiments of the devices are only schematic, for example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interfaces, devices or units, and may be electrical, mechanical or other forms.

The units illustrated as separate components may or may not be physically separate, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

The functions may be stored in a computer readable storage medium if implemented in the form of software functional units and sold or used as stand-alone products. In view of this understanding, the technical solutions of the present disclosure in essence, or the part that contributes to the related technologies, or the part of the technical solutions can be embodied in the form of a software product. The computer software product is stored in a storage medium and includes instructions that enables a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

## Claims

1. A method for transmission control, comprising:
receiving, by a terminal device, first configuration information, the first configuration information being used for indicating whether data of a first service or a first Radio Bearer (RB) is allowed to be transmitted using a store and forward mode of a satellite.

2. The method of claim 1, wherein when the first configuration information is used for indicating whether the data of the first service is allowed to be transmitted using the store and forward mode of the satellite, the first configuration information is configured by a core network device.

3. The method of claim 2, wherein the first configuration information comprises first indication information corresponding to each of services of the terminal device, the first indication information being used for indicating whether data of a respective service is allowed to be transmitted using the store and forward mode of the satellite, wherein the services of the terminal device comprise the first service.

4. The method of claim 3, wherein the first indication information is configured for a Quality of Service (QoS) flow corresponding to the service; or
the first indication information is configured for an Evolved Packet System (EPS) bearer corresponding to the service.

5. The method of claim 1, wherein when the first configuration information is used for indicating whether the data of the first RB is allowed to be transmitted using the store and forward mode of the satellite, the first configuration information is configured by a base station.

6. The method of claim 5, wherein the first configuration information comprises second indication information corresponding to each of RBs of the terminal device, the second indication information being used for indicating whether data of a respective RB is allowed to be transmitted using the store and forward mode of the satellite, wherein the RBs of the terminal device comprise the first RB.

7. The method of claim 5, wherein the first configuration information comprises a first RB list and/or a second RB list, wherein data of RB(s) in the first RB list is allowed to be transmitted using the store and forward mode of the satellite, and data of RB(s) in the second RB list is not allowed to be transmitted using the store-and-forward mode of the satellite.

8. The method of any one of claims 1, and 5 to 7, wherein when the first configuration information is used for indicating whether the data of the first RB is allowed to be transmitted using the store and forward mode of the satellite, the first configuration information is comprised in a Radio Resource Control (RRC) connection release message.

9. The method of any one of claims 1 to 8, wherein the first configuration information is used for indicating the data of the first service or the first RB is allowed to be transmitted using the store and forward mode of the satellite, the method further comprising:
when the terminal device is located within a coverage of a first satellite operating in the store and forward mode, and first data to be transmitted is present in the first service or the first RB, transmitting, by the terminal device, the first data.

10. The method of claim 9, wherein when the terminal device is in a non-connected state, transmitting, by the terminal device, the first data comprises:
transmitting, by the terminal device, the first data in a manner of small data; or
initiating, by the terminal device, a Radio Resource Control (RRC) connection establishment or resume procedure, and transmitting the first data through an RRC connection established or resumed by the RRC connection establishment or resume procedure.

11. The method of claim 9 or 10, wherein when the terminal device is in a connected state, transmitting, by the terminal device, the first data comprises:
transmitting, by the terminal device, the first data based on a first uplink resource, the first uplink resource being allocated by a network device.

12. The method of any one of claims 9 to 11, further comprising:
receiving, by the terminal device, third indication information, the third indication information being used for indicating whether the first satellite operates in the store and forward mode.

13. The method of claim 12, wherein the third indication information is transmitted through a system message transmitted by a base station or the first satellite.

14. The method of any one of claims 9 to 13, wherein a segmentation transmission is not supported for the first data.

15. The method of any one of claims 9 to 14, wherein data transmitted by the terminal device only comprises data allowed to be transmitted, the data allowed to be transmitted being data of a service or RB allowed to be transmitted, and the service or the RB allowed to be transmitted being a service or RB indicated by the first configuration information as being allowed to use the store and forward mode of the satellite.

16. The method of any one of claims 9 to 15, further comprising:
when the terminal device satisfies a first condition, stopping, by the terminal device, transmission of the first data, the first condition being related to a first data amount, wherein the first data amount is a maximum received data amount or a maximum received capacity allowed by the first satellite.

17. The method of claim 16, wherein if the first data amount is for the terminal device, the first condition is that an amount of data transmitted by the terminal device reaches the first data amount; or
if the first data amount is for the first service or the first RB, the first condition is that an amount of data of the first service or the first RB transmitted by the terminal device reaches the first data amount.

18. The method of claim 16 or 17, further comprising:
receiving, by the terminal device, second configuration information, the second configuration information being used for indicating the first data amount.

19. The method of claim 18, wherein the second configuration information is transmitted through at least one of:
a broadcast message; or a dedicated message.

20. The method of any one of claims 9 to 19, further comprising:
receiving, by the terminal device, fourth indication information, the fourth indication information being related to a stored data amount of the first satellite; and
stopping, by the terminal device, transmission of data based on the fourth indication information.

21. The method of claim 20, wherein the fourth indication information is used for indicating one of the following that:
the stored data amount of the first satellite reaches a second data amount, the second data amount being a maximum amount of data that the first satellite is allowed to store;
a stored data amount of the first satellite for the terminal device reaches a third data amount, the third data amount being a maximum amount of data the first satellite is allowed to store for the terminal device;
a stored data amount of the first satellite for the first service of the terminal device reaches a fourth data amount, the fourth data amount being a maximum amount of data the first satellite is allowed to store for the first service of the terminal device; or
a stored data amount of the first satellite for the first service reaches a fifth data amount, the fifth data amount being a maximum amount of data the first satellite is allowed to store for the first service.

22. The method of claim 20 or 21, wherein the fourth indication information is transmitted through at least one of:
a broadcast message; or a dedicated message.

23. A method for transmission control, comprising:
transmitting, by the network device, first configuration information, the first configuration information being used for indicating whether data of a first service or a first Radio Bearer (RB) is allowed to be transmitted using a store and forward mode of a satellite.

24. The method of claim 23, wherein when the first configuration information is used for indicating whether the data of the first service is allowed to be transmitted using the store and forward mode of the satellite, the first configuration information is configured by a core network device.

25. The method according to claim 24, wherein the first configuration information comprises first indication information corresponding to each of services of a terminal device, the first indication information being used for indicating whether data of a respective service is allowed to be transmitted using the store and forward mode of the satellite, wherein the services of the terminal device comprise the first service.

26. The method of claim 25, wherein the first indication information is configured for a Quality of Service (QoS) flow corresponding to the service; or
the first indication information is configured for an Evolved Packet System (EPS) bearer corresponding to the service.

27. The method of claim 23, wherein when the first configuration information is used for indicating whether the data of the first RB is allowed to be transmitted using the store and forward mode of the satellite, the first configuration information is configured by a base station.

28. The method of claim 27, wherein the first configuration information comprises second indication information corresponding to each of RBs of a terminal device, the second indication information being used for indicating whether data of a respective RB is allowed to be transmitted using the store and forward mode of the satellite, wherein the RBs of the terminal device comprise the first RB.

29. The method of claim 27, wherein the first configuration information comprises a first RB list and/or a second RB list, wherein data of RB(s) in the first RB list is allowed to be transmitted using the store and forward mode of the satellite, and data of RB(s) in the second RB list is not allowed to be transmitted using the store-and-forward mode of the satellite.

30. The method of any one of claims 24, 27 to 29, wherein when the first configuration information is used for indicating whether the data of the first RB is allowed to be transmitted using the store and forward mode of the satellite, the first configuration information is comprised in a Radio Resource Control (RRC) connection release message.

31. The method of any one of claims 23 to 30, further comprising:
transmitting, by the network device, third indication information, the third indication information being used for indicating whether a first satellite operates in the store and forward mode, wherein a terminal device configured with the first configuration information is located within a coverage of the first satellite.

32. The method of claim 31, wherein the third indication information is transmitted through a system message transmitted by a base station.

33. The method of any one of claims 23 to 32, further comprising:
transmitting, by the network device, second configuration information, the second configuration information being used for indicating a first data amount, wherein the first data amount is a maximum received data amount or a maximum received capacity allowed by the first satellite, a first condition determined based on the first data amount is used for controlling the terminal device to stop transmission of the first data, and the first data is to-be-transmitted data for the first service or the first RB.

34. The method of claim 33, wherein if the first data amount is for the terminal device, the first condition is that an amount of data transmitted by the terminal device reaches the first data amount; or
if the first data amount is for the first service or the first RB, the first condition is that an amount of data of the first service or the first RB transmitted by the terminal device reaches the first data amount.

35. The method of claim 33 or 34, wherein the first data amount is transmitted through at least one of:
a broadcast message; or a dedicated message.

36. The method of any one of claims 23 to 35, further comprising:
transmitting, by the network device, fourth indication information, the fourth indication information being related to a stored data amount of the first satellite, wherein the fourth indication information is used for controlling the terminal device to stop transmission of data.

37. The method of claim 36, wherein the fourth indication information is used for indicating one of the following that:
the stored data amount of the first satellite reaches a second data amount, the second data amount being a maximum amount of data the first satellite is allowed to store;
a stored data amount of the first satellite for the terminal device reaches a third data amount, the third data amount being a maximum amount of data the first satellite is allowed to store for the terminal device;
a stored data amount of the first satellite for the first service of the terminal device reaches a fourth data amount, the fourth data amount being a maximum amount of data the first satellite is allowed to store for the first service of the terminal device; or
a stored data amount of the first satellite for the first service reaches a fifth data amount, the fifth data amount being a maximum amount of data the first satellite is allowed to store for the first service.

38. The method of claim 36 or 37, wherein the fourth indication information is transmitted through at least one of:
a broadcast message; or a dedicated message.

39. An apparatus for transmission control, applied to a terminal device, comprising:
a receiving unit, configured to receive first configuration information, the first configuration information being used for indicating whether data of a first service or a first Radio Bearer (RB) is allowed to be transmitted using a store and forward mode of a satellite.

40. An apparatus for transmission control, applied to a network device, comprising:
a transmitting unit, configured to transmit first configuration information, the first configuration information being used for indicating whether data of a first service or a first Radio Bearer (RB) is allowed to be transmitted using a store and forward mode of a satellite.

41. A terminal device, comprising: a processor and a memory, wherein the memory is configured to store a computer program, and the processor is configured to call and execute the computer program stored in the memory to perform the method of any one of claims 1 to 22.

42. A network device, comprising: a processor and a memory, wherein the memory is configured to store a computer program, and the processor is configured to call and execute the computer program stored in the memory to perform the method of any one of claims 23 to 38.

43. A chip, comprising: a processor, configured to call and execute a computer program from a memory, to cause a device on which the chip is installed to perform the method of any one of claims 1 to 22.

44. A chip, comprising: a processor, configured to call and execute a computer program from a memory, to cause a device on which the chip is installed to perform the method of any one of claims 23 to 38.

45. A computer readable storage medium, for storing a computer program that causes a computer to perform the method of any one of claims 1 to 22.

46. A computer readable storage medium, for storing a computer program that causes a computer to perform the method of any one of claims 23 to 38.

47. A computer program product, comprising computer program instructions that cause a computer to perform the method of any one of claims 1 to 22.

48. A computer program product, comprising computer program instructions that cause a computer to perform the method of any one of claims 23 to 38.

49. A computer program for causing a computer to perform the method of any one of claims 1 to 22.

50. A computer program for causing a computer to perform the method of any one of claims 23 to 38.
